# EUROPEAN PATENT SPECIFICATION

(11) **EP 4 173 861 B1**
(45) Date of publication and mention of the grant of the patent: **12.11.2025**
(21) Application number: 22198946.0
(22) Date of filing: 30.09.2022
(51) Int. Cl.: B60J 1/16, E06B 3/46

(54) **SLIDING WINDOW FOR VEHICLES**
SCHIEBEFENSTER FÜR FAHRZEUGE
FENÊTRE COULISSANTE POUR VÉHICULES

(30) Priority: 26.10.2021 IT 202100027452
(43) Date of publication of application: 03.05.2023
(73) Proprietor: Escar S.r.l., 29016 Cortemaggiore (PC) (IT)
(72) Inventor: FRANCHI, Giuseppe, 77240 BOSANSKA KRUPA (BA); FRANCHI, Simone, 29010 ALSENO (PIACENZA) (IT)
(74) Representative: Bacchini, Davide

(56) References cited:
- EP-A2- 0 150 153
- FR-A- 1 357 593
- US-A- 2 317 312

## Description

The present invention relates to a window for vehicles.

Windows are known in which one glass is sliding with respect to another, fixed. When the window is closed, i.e., the two glasses are side by side, the two glasses define a seamless, continuous single partition wall in the adjacent area. However, these windows are not very versatile as only one of the two windows is sliding, allowing a limited window opening.

Some windows are further known in which both glasses are sliding with respect to each other. To obtain the double sliding glass, the known solutions use a dedicated linear guide for each glass. These dedicated guides are usually parallel to each other, thus when the window is closed, inevitably one of the two glasses is retracted, i.e., on a parallel plane, but offset with respect to the other, resulting in a non-optimal seal.

Documents FR 1 357 593 A and US2,317,312 A show sliding windows where both panels are movable with respect to each other so that it is possible to bring them into the same plane when closing.

In this context, the technical task underlying the present invention is to propose a window for vehicles which obviates the drawbacks in the known art as described above.

In particular, the object of the present invention is to propose a window for vehicles, which has both sliding glasses but at the same time ensures a better seal with respect to the known solutions.

The stated technical task and specified aims are substantially achieved by a window for vehicles as defined by the subject-matter of claim 1.

In accordance with an embodiment, the path is a groove obtained directly on the frame or on portions mounted on the frame.

Preferably, the window comprises a mechanical stop means of each panel in the closed position thereof, said mechanical stop means being configurable in an engagement position, in which it prevents the panel from moving from the closed position, and a disengagement position, in which it allows the movement of the panel.

Further characteristics and advantages of the present invention will become more apparent from the approximate and thus non-limiting description of a preferred, but not exclusive, embodiment of a sliding window for vehicles, as illustrated in the accompanying drawings, in which:

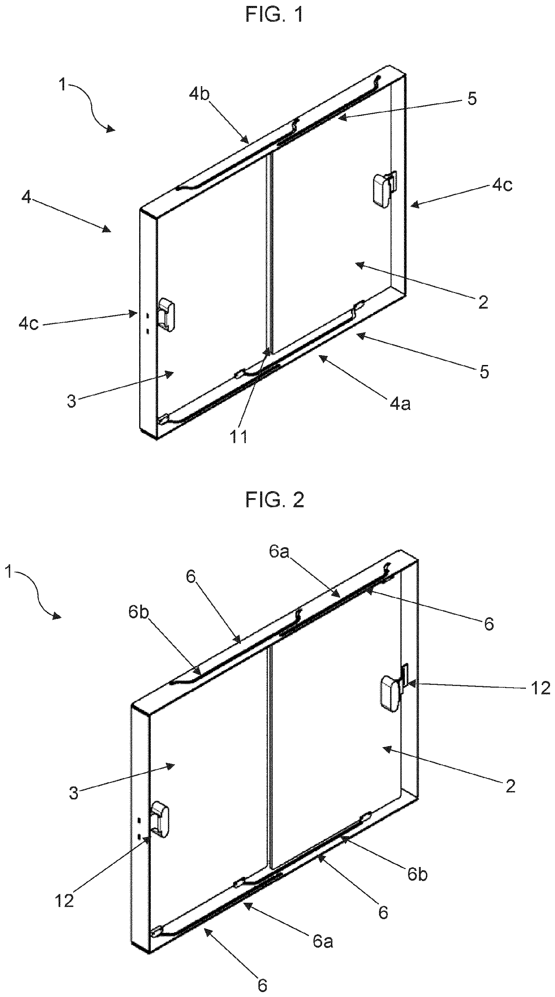

- figure 1 shows a perspective view from inside a sliding window for vehicles, according to the present invention, in which both panels are in the closed position;
- figure 2 shows a perspective view from inside the window of figure 1, in which a first panel is in an intermediate position between its closed and opening position;

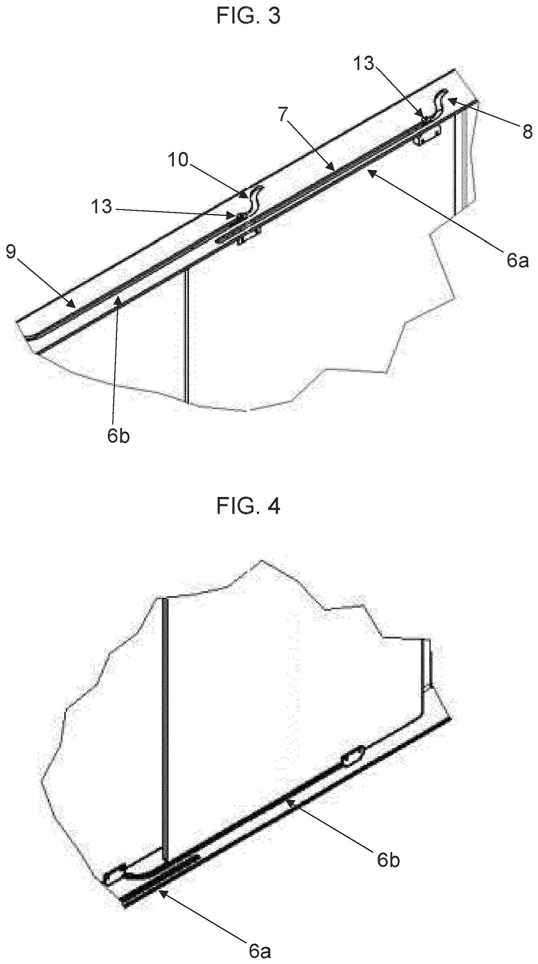

- figure 3 shows a detail (upper side of the frame) of the window in the configuration of figure 2;
- figure 4 shows a detail (lower side of the frame) of the window in the configuration of figure 2;

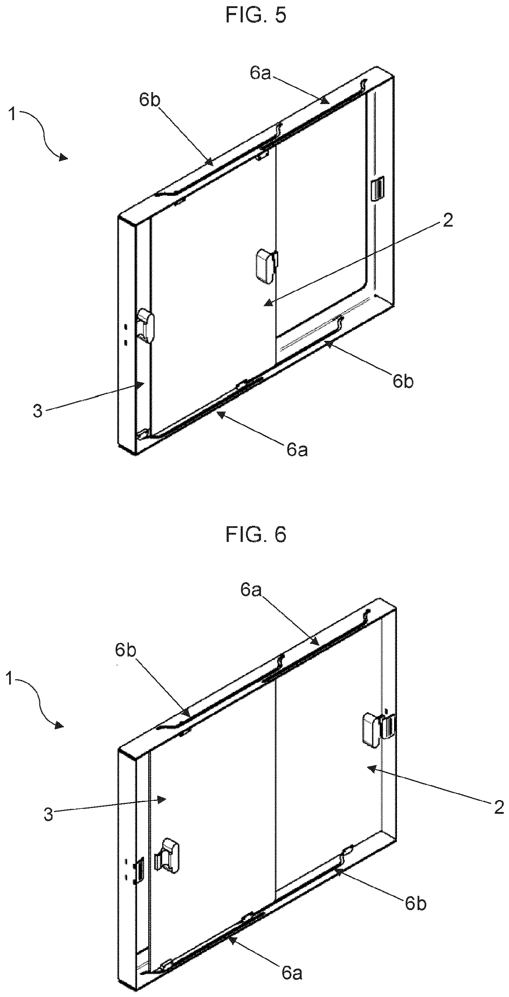

- figure 5 shows a perspective view from inside the window of figure 1, in which the first panel is in an opening position;
- figure 6 shows a perspective view from inside the window of figure 1, in which the second panel is in an intermediate position between its closed and opening position;

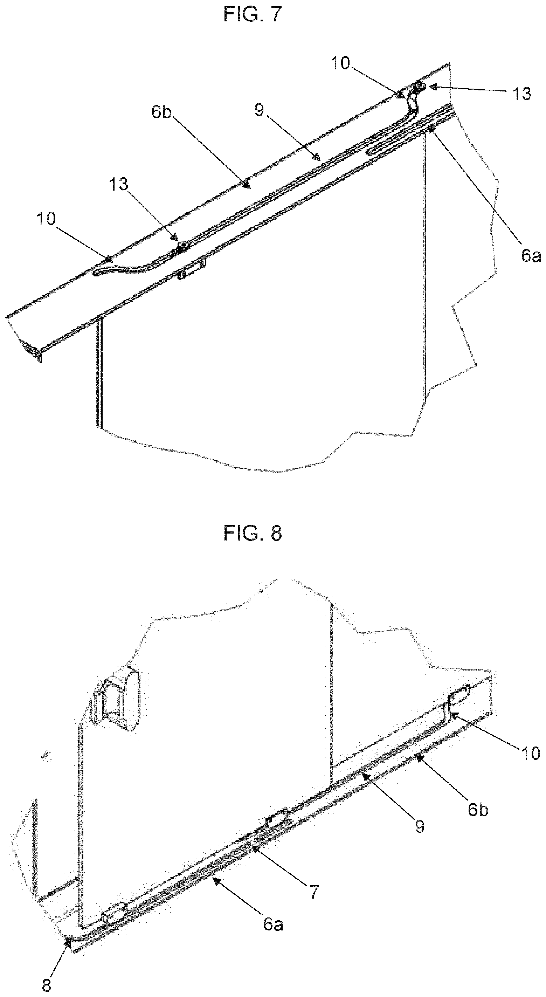

- figure 7 shows a detail (upper side of the frame) of the window in the configuration of figure 6;
- figure 8 shows a detail (lower side of the frame) of the window in the configuration of figure 6;

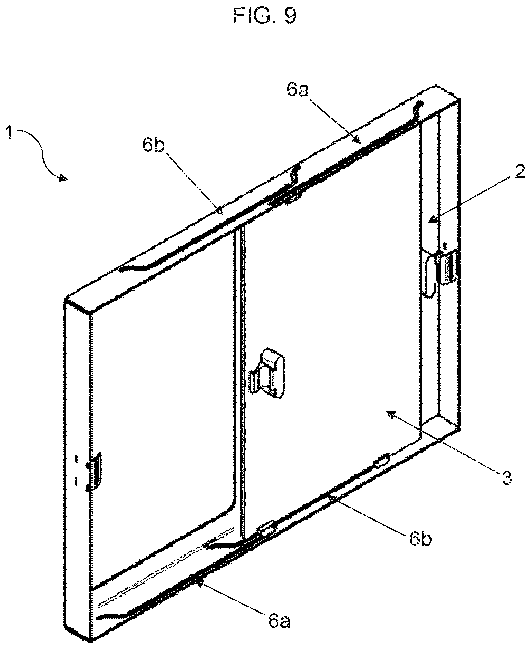

- figure 9 shows a perspective view from inside the window of figure 1, in which the second panel is in an opening position.

With reference to the figures, reference numeral 1 indicates a window for vehicles.

The window 1 comprises a first and a second panel 2, 3.

Preferably, the panels 2, 3 are made of transparent material. Preferably, the panels 2, 3 are made of glassy material. That is, the panels 2, 3 are glasses.

The window 1 comprises a guide means 5 for the first and second panel 2, 3. The first and the second panel 2, 3 are slidably mounted on the guide means 5 so that each of the panels 2, 3 is movable between a closed position, in which it is located adjacent and coplanar with the other panel 2, 3 so as to define a single separation wall between an internal environment and an external environment, and an opening position, in which it is at least partly superimposed on the other panel 2, 3.

In particular, in the closed position the two panels 2, 3 are located adjacent to each other and separated by a gap 11. The gap 11 represents the only continuity between the two panels 2, 3, which are therefore perfectly aligned. Preferably, the window 1 comprises a sealing means (not shown) which covers the gap 11. The sealing means is of known type. Preferably, the window 1 comprises a mechanical stop means 12 operable on the panels 2, 3 to keep them in the closed position. In particular, the mechanical stop means is configurable in an engagement position, in which it prevents the panel 2, 3 from moving from the closed position, and a disengagement position, in which it allows the movement of the panel 2, 3.

It is possible to include the use of any known mechanical stop means.

For each panel 2, 3 the guide means 5 comprises at least one path 6 which the panel 2, 3 is constrained to follow to pass between the closed position and the opening position, and vice versa.

The path 6 comprises at least one straight section and at least one curvilinear section. The straight section allows to obtain the sliding of one panel 2, 3 with respect to the other, while the curvilinear section is shaped so as to bring the panel 2, 3 from a retracted position to a position adjacent to the other panel 2, 3, or vice versa.

In the invention described and illustrated herein, the guide means 5 comprises at least one of a first type of path 6a and a second type of path 6b.

The first type of path 6a comprises a substantially linear or straight central portion 7 and a curvilinear lateral portion 8. The lateral portion 8 originates from one end of the central portion 7. The lateral portion 8 has an extension defining a curve which leads the corresponding constrained panel 2, 3 to return from a retracted position (or advanced, depending on the point of view with which the two panels are observed) to a position aligned and adjacent to the other panel 2, 3, i.e., the closed position.

The second type of path 6b comprises a substantially straight central portion 9 and two curvilinear lateral portions 10. The curvilinear lateral portions 10 originate from two opposite ends of the central portion 9, respectively.

The central portions 7, 9 of the first and the second type of paths 6a, 6b extend according to two substantially parallel directions. These parallel but misaligned trajectories allow the at least partial superimposition between the panels 2, 3 reached in the opening position.

The two curvilinear lateral portions 10 of the second type of groove 6b each extend away from the respective origin end. The extension is such that the lateral portions 10 both end at the same amount of width of the side. This amount defines the closed position.

Referring to the internal environment which the window 1 separates from the external environment, the curvilinear lateral portions 8, 10 extend away from the internal environment.

Preferably, the lateral portions 8, 10 have a substantially S-shaped extension. By way of example, an S-shaped curve can be the logistic function.

The window 1 comprises a frame 4. The frame 4 extends such as to enclose the two panels 2, 3. The frame 4 is a framing of the panels 2, 3. Preferably, the guide means 5 is arranged on the frame 4.

The frame 4 comprises at least a lower side 4a and an upper side 4b. Preferably, the frame 4 comprises a lower side 4a, an upper side 4b and two connecting sides 4c between the two lower and upper sides 4a, 4b. That is, the frame 4 has a substantially rectangular shape.

Alternatively, the frame 4 can have any shape which has an upper area and a lower area.

In the invention described and illustrated herein, the guide means 5 comprises a first type of path 6a and a second type of path 6b both on the lower side 4a and on the upper side 4b.

According to the length of the lower and upper sides 4a, 4b the arrangement of the two types of paths on the lower side 4a is inverted with respect to that on the upper side 4b. For example, in the embodiment shown in the figures, going from left to right on the lower side 4a a first type of path 6a is found and then a second type of path 6b, while on the upper side 4b a second type of path 6b is found and then a first type of path 6a.

In the invention described and illustrated herein, the first panel 2 is slidably mounted to the upper first and second type of paths 6a, 6b (i.e., of the upper side 4b) and to the lower second type of path 6b (i.e., of the lower side 4a). The second panel 3 is slidably mounted to the upper second type of path 6b (i.e., the upper side 4b) and to the lower first and second type of paths 6a, 6b. Such a configuration allows to take advantage of a common trajectory.

That is, a panel 2, 3 is suspended (i.e., mounted on the upper side 4b) on two points and rests (i.e., mounted on the lower side 4a) on one point, while the other panel 2, 3 is suspended on one point and rests on two points.

In the embodiment described and illustrated herein, the path 6 is a groove obtained in the frame 4. Preferably, the groove 6 is made on the lower side 4a or on the upper side 4b of the frame 4.

Preferably, each panel 2, 3 is slidably mounted to the groove 6 by means of one or more pins 13.

In an alternative embodiment, the path 6 is a groove obtained on a portion mounted on the frame 2. For example, the portions are screwed to the frame.

Preferably, such portions are made of plastic material. Alternatively, they can be made of any known type of material.

In an alternative embodiment (not shown), the guide means comprises for each of the lower and upper sides 4a, 4b a groove having a substantially straight extension. A curved groove originates at at least one end portion of this straight groove which moves away therefrom. There is thus a crossing point between the curved groove and the remaining part of the straight groove. Preferably, at the crossing point the guide means comprises abutment means which allows the exclusive passage of only one of the two panels 2, 3 in the curved groove.

Preferably, two curved grooves originate from two opposite end portions of the straight groove.

The characteristics of the sliding window for vehicles, in accordance with the present invention, emerge clearly from the above description, as do the advantages.

In particular, the fact that in the closed position the panels are on the same plane and thus define a single separation surface increases the seal of the closed window with respect to the known solutions.

Furthermore, the particular arrangement of two types of paths as described above allows to simplify the guide means necessary to obtain the aforesaid effect as much as possible.

## Claims

1. A window (1) for vehicles, comprising:
a first and a second panel (2, 3);
guide means (5) on which the first and the second panel (2, 3) are slidably mounted so that each of the panels (2, 3) is movable between a closed position, in which it is located adjacent and coplanar with the other panel (2, 3) so as to define a single separation wall between an internal environment and an external environment, and an opening position, in which it is at least partly superimposed on the other panel (2, 3),
wherein the guide means (5) comprise at least a first type of path (6a) and a second type of path (6b),
wherein said first type of path (6a) has a substantially straight central portion (7) and a curvilinear lateral portion (8) originating from one end of the central portion (7) and said second type of path (6b) has a substantially straight central portion (9) and two curvilinear lateral portions (10) originating respectively from two opposite ends of the central portion (9),
wherein the central portions (7, 9) of the first and the second type of paths (6a, 6b) extend according to two substantially parallel directions,
said window (1) comprising a frame (4) arranged as a framing around the panels (2, 3), both on a lower side (4a) and on an upper side (4b) of the frame (4) there being arranged the first type of path (6a) and the second type of path (6b),
**characterized in that** the first panel (2) is slidably mounted on the upper side (4b) of the frame (4) to the first and second type of paths (6a, 6b) and on the lower side (4a) to only the second type of path (6b) and the second panel (3) is slidably mounted on the upper side (4b) to only the second type of path (6b) and on the lower side (4a) to the first and second type of paths (6a, 6b).

2. The window (1) according to claim 1, wherein the path (6, 6a, 6b) comprises a groove obtained on the frame (4).

3. The window (1) according to any one of the preceding claims, comprising a mechanical stop means (12) of each panel (2, 3) in the closed position thereof, said mechanical stop means (12) being configurable in an engagement position, in which it prevents the panel (2, 3) from moving from the closed position, and a disengagement position, in which it allows the movement of the panel (2, 3).

## Patentansprüche

1. Fenster (1) für Fahrzeuge, umfassend:
ein erstes und ein zweites Paneel (2, 3);
Führungsmittel (5), auf denen das erste und das zweite Paneel (2, 3) verschiebbar montiert sind, sodass ein jedes der Paneele (2, 3) zwischen einer geschlossenen Position, in der es angrenzend an das und ebenflächig mit dem anderen Paneel (2, 3) positioniert ist, sodass eine einzelne Trennwand zwischen einer internen Umgebung und einer externen Umgebung definiert wird, und einer Öffnungsposition, in der es das andere Paneel (2, 3) zumindest teilweise überlagert, bewegbar ist,
wobei die Führungsmittel (5) mindestens eine erste Art von Weg (6a) und eine zweite Art von Weg (6b) umfassen, wobei die erste Art von Weg (6a) einen im Wesentlichen geraden mittigen Abschnitt (7) und einen gekrümmten Seitenabschnitt (8) aufweist, der von einem Ende des mittigen Abschnitts (7) entspringt, und die zweite Art von Weg (6b) einen im Wesentlichen geraden mittigen Abschnitt (9) und zwei gekrümmte Seitenabschnitte (10) aufweist, die jeweils von zwei entgegengesetzten Enden des mittigen Abschnitts (9) entspringen,
wobei sich die mittigen Abschnitte (7, 9) der ersten und der zweiten Art von Wegen (6a, 6b) gemäß zwei im Wesentlichen parallelen Richtungen erstrecken,
wobei das Fenster (1) einen Rahmen (4) umfasst, der als Umrahmung rund um die Paneele (2, 3) angeordnet ist, wobei sowohl auf einer unteren Seite (4a) als auch auf einer oberen Seite (4b) des Rahmens (4) die erste Art von Weg (6a) und die zweite Art von Weg (6b) angeordnet sind,
**dadurch gekennzeichnet, dass** das erste Paneel (2) verschiebbar auf der oberen Seite (4b) des Rahmens (4) an der ersten und zweiten Art von Wegen (6a, 6b) und auf der unteren Seite (4a) nur an der zweiten Art von Weg (6b) montiert ist und das zweite Paneel (3) verschiebbar auf der oberen Seite (4b) nur an der zweiten Art von Weg (6b) und auf der unteren Seite (4a) an der ersten und zweiten Art von Wegen (6a, 6b) montiert ist.

2. Fenster (1) nach Anspruch 1, wobei der Weg (6, 6a, 6b) eine auf dem Rahmen (4) ausgebildete Nut umfasst.

3. Fenster (1) nach einem der vorhergehenden Ansprüche, umfassend mechanische Stoppmittel (12) eines jeden Paneels (2, 3) in dessen geschlossener Position, wobei die mechanischen Stoppmittel (12) in einer Eingriffsposition auslegbar sind, in der sie verhindern, dass sich das Paneel (2, 3) von der geschlossenen Position bewegt, und in einer Löseposition, in der sie die Bewegung des Paneels (2, 3) erlauben.

## Revendications

1. Fenêtre (1) pour véhicules, comprenant :
un premier et un second panneau (2, 3) ;
des moyens de guidage (5) sur lesquels le premier et le second panneau (2, 3) sont montés de manière coulissante de sorte que chacun des panneaux (2, 3) est mobile entre une position fermée, dans laquelle il est situé adjacent et coplanaire à l'autre panneau (2, 3) de manière à définir une seule paroi de séparation entre un environnement interne et un environnement externe, et une position d'ouverture, dans laquelle il est au moins partiellement superposé à l'autre panneau (2, 3),
dans laquelle les moyens de guidage (5) comprennent au moins un premier type de chemin (6a) et un second type de chemin (6b),
dans laquelle ledit premier type de chemin (6a) a une portion centrale substantiellement droite (7) et une portion latérale curviligne (8) provenant d'une extrémité de la portion centrale (7) et ledit second type de chemin (6b) a une portion centrale substantiellement droite (9) et deux portions latérales curvilignes (10) provenant respectivement de deux extrémités opposées de la portion centrale (9),
dans laquelle les portions centrales (7, 9) des premier et second types de chemins (6a, 6b) s'étendent selon deux directions substantiellement parallèles,
ladite fenêtre (1) comprenant un cadre (4) agencé en tant qu'encadrement autour des panneaux (2, 3), à la fois sur un côté inférieur (4a) et sur un côté supérieur (4b) du cadre (4), le premier type de chemin (6a) et le second type de chemin (6b) y étant agencés,
**caractérisée en ce que** le premier panneau (2) est monté de manière coulissante sur le côté supérieur (4b) du cadre (4) vers les premier et second types de chemins (6a, 6b) et sur le côté inférieur (4a) uniquement vers le second type de chemin (6b) et le second panneau (3) est monté de manière coulissante sur le côté supérieur (4b) uniquement vers le second type de chemin (6b) et sur le côté inférieur (4a) vers les premier et second types de chemins (6a, 6b).

2. Fenêtre (1) selon la revendication 1, dans laquelle le chemin (6, 6a, 6b) comprend une rainure obtenue sur le cadre (4).

3. Fenêtre (1) selon l'une quelconque des revendications précédentes, comprenant des moyens d'arrêt mécanique (12) de chaque panneau (2, 3) dans sa position fermée, lesdits moyens d'arrêt mécanique (12) pouvant être configurés dans une position d'engagement, dans laquelle ils empêchent le panneau (2, 3) de se déplacer de la position fermée, et une position de dégagement, dans laquelle ils permettent le mouvement du panneau (2, 3).
